# EUROPÄISCHE PATENTSCHRIFT

(11) **EP 2 582 619 B1**
(45) Veröffentlichungstag und Bekanntmachung des Hinweises auf die Patenterteilung: **26.08.2020**
(21) Anmeldenummer: 10782532.5
(22) Anmeldetag: 27.08.2010
(51) Int. Cl.: C01B 7/03, B01D 61/46, C02F 1/469, C02F 103/06, C02F 103/08

(54) **VERFAHREN ZUR ERZEUGUNG VON CHLORWASSERSTOFF ODER EINER WÄSSERIGEN LÖSUNG DERSELBEN UNTER VERWENDUNG EINES SALZHALTIGEN ROHWASSERS UND ELEKTRODIALYSE-SYSTEM**
METHOD FOR PRODUCING HYDROGEN CHLORIDE OR AN AQUEOUS SOLUTION THEREOF USING UNTREATED SALT WATER AND ELECTRODIALYSIS SYSTEM
PROCÉDÉ DE PRODUCTION DE CHLORURE D'HYDROGÈNE OU D'UNE SOLUTION AQUEUSE DE CHLORURE D'HYDROGÈNE AU MOYEN D'UNE EAU NON TRAITÉE SALÉE ET SYSTÈME D'ÉLECTRODIALYSE

(30) Priorität: 21.06.2010 DE 102010017491
(43) Veröffentlichungstag der Anmeldung: 24.04.2013
(73) Patentinhaber: WME Gesellschaft für windkraftbetriebene Meerwasserentsalzung mbH, 18556 Dranske/Rügen (DE)
(72) Erfinder: HUSS, Rainer, 87474 Buchenberg (DE)
(74) Vertreter: Kuhnen & Wacker Patent- und Rechtsanwaltsbüro PartG mbB
(86) Internationale Anmeldenummer: PCT/EP2010/005284
(87) Internationale Veröffentlichungsnummer: WO 2011/160662

(56) Entgegenhaltungen:
- EP-A1- 1 232 997
- EP-A2- 0 999 179
- WO-A1-95/07752
- DE-A1- 10 217 885
- JP-A- 55 003 823

## Beschreibung

Die Erfindung betrifft ein Verfahren zur Erzeugung von Chlorwasserstoff (HCl) oder einer wässerigen Lösung derselben, nämlich Chlorwasserstoffsäure oder Salzsäure, unter Verwendung eines salzhaltigen Rohwassers nach Anspruch 1, und ein Elektrodialyse-System nach Anspruch 13.

Salzsäure wird in vielen Bereichen der Technik eingesetzt. Dabei bereitet deren Anlieferung an den Verbrauchsort mitunter erhebliche Probleme.

Dies ist insbesondere der Fall, wenn der Verbrauchsort in schwer erreichbaren Einsatzgebieten liegt. So kann Salzsäure beispielsweise in Meerwasserentsalzungsanlagen als Antiscaling- und Reinigungsmittel in großem Maßstab eingesetzt werden.

Zudem wird Salzsäure bei Erdölbohrungen zum Öffnen von Gesteinsporen und Erzeugen von Kohlenstoffdioxid im Carbonatgestein eingesetzt, um die Fördereffizienz zu steigern.

Darüber hinaus wird Salzsäure auch in abgelegenen Betrieben als Reinigungs-, Desinfektions- oder Beizmittel eingesetzt.

Insbesondere für den Fall, dass der Verbrauchsort in einem nur schwer erreichbaren Gebiet, wie entlegene Landesteile oder Inseln, liegt, wird konzentrierte Salzsäure zu den vorstehend genannten Zwecken verwendet. Die Verwendung konzentrierter Säure hat zum Einen den Vorteil, dass die zu transportierende Masse klein gehalten werden kann.

Zum Anderen besteht jedoch die permanente Gefahr, dass die entsprechenden Transportbehälter undicht werden. Zudem wird beim Transport von konzentrierter, rauchender Salzsäure immer auch flüchtiges HCl-Gas in die Umgebung emittiert. Hierdurch kann es in der Umgebung der Transportgefäße zu Korrosion kommen.

Alternativ wird vielfach auch die Verwendung von technischer Schwefelsäure bevorzugt. Diese ist wesentlich höher konzentriert und weist eine etwa dreimal so hohe Äquivalentkonzentration in val/L auf.

So wird trotz der oftmals besseren Eignung von Salzsäure für einen vorgegebenen Prozess die nichtrauchende, die Umgebung nicht beeinträchtigende und weniger korrodierende Schwefelsäure bevorzugt eingesetzt. Allerdings bildet Schwefelsäure schwerlösliche Salze mit den Erdalkalimetallionen Ca²⁺, Sr²⁺ und Ba²⁺. Dies kann möglicherweise zu unerwünschten Ausfällungen fuhren.

Aus technologischen Gründen sowie aufgrund der vorstehend dargestellten Sicherheitsaspekte wäre daher der Einsatz verdünnter Salzsäure auch in schwer erreichbaren Einsatzgebieten, wie beispielsweise Meerwasser-Entsalzungsanlagen oder Erdölbohrinseln, erstrebenswert.

Aus Dokument DE 102 17 885 A1 ist ein Verfahren zur elektrochemischen Konditionierung eines Mediums wie Meerwasser oder dgl. für dessen Entsalzung bekannt, um die Ablagerung von schwerlöslichen Verbindungen, insbesondere Erdalkaliverbindungen, im Laufe von Entsalzungsprozessen wie Destillation, umgekehrter Osmose, Elektrodialyse oder sonstiger derartiger Prozesse im wesentlichen zu unterbinden, wobei hierzu mittels Säure der pH-Wert des Mediums abgesenkt wird. Hierbei wird die Säure durch einen elektrochemischen Prozeß direkt im zu entsalzenden Medium erzeugt.

Das Dokument EP 0 999 179 A2 offenbart ein Verfahren zur Herstellung von Salzsäure mit Konzentrationen über der Konzentration des Wasser/HCl-Azeotrops, wobei das Konzentrieren der Salzsäure durch zumindest einen elektodialytischen Schritt erfolgt.

Das Dokument JP 55003823 A offenbart ein Verfahren zur Aufbereitung eines Meerwassers mittels einer zweistufigen Umkehrosmose, wobei eine pH-Regulierung des Meerwassers mittels der Zugabe von Salzsäure erfolgt. Bei diesem Verfahren wird eletrolytisch Natrium-Hypochlorid erzeugt, welches dem Meerwasser zugegeben wird, um die Konzentration von Natrium-Hypochlorid im Meerwasser auf 0,05 ppm einzustellen.

Aufgabe der vorliegenden Erfindung ist es daher, Chlorwasserstoff oder eine wässerige Lösung derselben direkt am Einsatzort derselben unter Verwendung eines salzhaltigen Rohwassers zu erzeugen.

Diese Aufgabe wird durch das Verfahren zur Erzeugung von Chlorwasserstoff oder einer wässerigen Lösung derselben mit den Merkmalen des Anspruches 1 und das Elektrodialyse-System mit den Merkmalen des Anspruchs 13 gelöst.

Erfindungsgemäß wird ein Verfahren zur Erzeugung von Chlorwasserstoff oder einer wässerigen Lösung derselben, nämlich Salzsäure, unter Verwendung eines salzhaltigen Rohwassers vorgeschlagen, wobei das Verfahren die Schritte aufweist:
a) Bereitstellen eines ersten Elektrolyten,
   wobei der erste Elektrolyt Chloridionen enthält;
b) Durchführen einer Elektrodialyse,
   wobei der erste Elektrolyt einer kathodischen Reduktion unterzogen wird, woraus ein Katholyt resultiert,
   wobei im ersten Elektrolyten die Konzentration an Chloridionen sinkt,
   wobei im ersten Elektrolyten die Konzentration an Hydroxidionen steigt, und
   wobei ein Produkt in Gestalt von Chlorwasserstoff oder einer wässerigen Lösung derselben erzeugt wird;
c) Verarbeiten bzw. Aufbereiten wenigstens einer Teilmenge des Katholyten,
   woraus der erste Elektrolyt resultiert,
   wobei ein salzhaltiges Rohwasser verwendet wird,
   wobei im Katholyten die Konzentration an Chloridionen steigt, und
   wobei im Katholyten die Konzentration an Hydroxidionen sinkt; und
d) wenigstens teilweises Wiederverwenden des nach Schritt (c) verarbeiteten Katholyten als der erste Elektrolyt in Schritt (b).

Dabei wird die Elektrodialyse in einer Elektrodialysezelle durchgeführt, wobei die Elektrodialysezelle eine Dreikammern-Elektrodialysezelle ist und drei Kammern aufweist, nämlich einen Kathodenraum, der eine Kathode aufnimmt, einen Produktraum, der als Mittelkammer ausgebildet ist, und einen Anodenraum, der eine Anode aufnimmt.

Hierbei ist erstmalig vorgesehen, ein Elektrodialyse-Verfahren durchzuführen, bei dem ein Produkt in Gestalt von Chlorwasserstoff oder einer wässerigen Lösung derselben, nämlich Salzsäure, erzeugt wird. Dabei wird wenigstens eine Teilmenge des bei der Elektrodialyse entstehenden Katholyten unter Verwendung eines salzhaltigen Rohwassers verarbeitet. Der derart verarbeitete bzw. aufbereitete Katholyt wird dann als der erste Elektrolyt in Schritt (b) wenigstens teilweise wiederverwendet.

Hierdurch wird eine aufwendige Entsorgung des bei der Elektrodialyse entstehenden Katholyten vorteilhaft vermieden.

Zudem ermöglicht es das erfindungsgemäße Verfahren, aufgrund der Wiederverwendung des verarbeiteten Katholyten wenigstens teilweise auf die Verwendung zusätzlicher Chemikalien, insbesondere konzentrierter Säuren, wie beispielsweise konzentrierter Salzsäure, zu verzichten.

Damit werden nicht nur die Rohstoffkosten für die Elektrodialyse reduziert, sondern es kann auch auf den Einsatz zusätzlicher Chemikalien verzichtet werden. So ist es nämlich erfindungsgemäß möglich, Chlorwasserstoff oder Salzsäure unmittelbar am Einsatzort aus häufig vorhandenen, ungefährlichen natürlichen Salzwässern zu erzeugen.

Durch das erfindungsgemäße Verfahren wird es somit möglich, Chlorwasserstoff oder eine wässerigen Lösung derselben an schwer zugänglichen Einsatzorten oder an Einsatzorten bereitzustellen, die nur unter erheblichem logistischem Aufwand mit Chemikalien beliefert werden könnten.

Erfindungsgemäß wird erstmals zur Durchführung einer Elektrodialyse zur Gewinnung von Chlorwasserstoff oder Salzsäure, und insbesondere des erfindungsgemäßen Verfahrens die Verwendung einer Dreikammern-Elektrodialysezelle vorgeschlagen. Zwar hat diese den Nachteil, dass im Gegensatz zur herkömmlich verwendeten Vierkammer-Elektrodialysezelle keine Trennung der entstehenden Chlorid- und Hydroxidionen durch eine zusätzliche Membran stattfindet. Hierdurch wird es somit nicht möglich, chloridfreies NaOH zu gewinnen.

Andererseits hat der Einsatz einer Dreikammer-Elektrodialysezelle den Vorteil, dass auf den Einsatz einer zusätzlichen Membran verzichtet werden kann. Hierdurch wird die Gestaltung der Elektrodialysezelle konstruktiv vereinfacht und kostengünstiger.

Zudem kann das erfindungsgemäße Elektrodialyse-Verfahren bei einer geringeren Zellspannung durchgeführt werden, wodurch der Energiebedarf vorteilhaft gesenkt wird.

Erfindungsgemäß wird unter einem Elektrolyten ein ionenleitendes Fluid, insbesondere eine wässerige Salzlösung, verstanden. Unter einem Katholyt wird ein Elektrolyt verstanden, auf den mittels der kathodischen Reduktion elektrochemisch eingewirkt wurde. Unter einem Anolyt wird ein Elektrolyt verstanden, auf den mittels der anodischen Oxidation elektrochemisch eingewirkt wurde.

Vorteilhafte Weiterbildungen des erfindungsgemäßen Erzeugungsverfahrens sind Gegenstand der abhängigen Ansprüche 2 bis 12.

So kann das salzhaltige Rohwasser ein natürliches oder künstlich hergestelltes Salzwasser, vorzugsweise ein Meerwasser, ein Brackwasser, ein Grundwasser, ein Quellwasser, eine natürliche oder künstlich hergestellte Sole, oder Mischungen oder Konzentrate derselben, sein.

Damit können für das erfindungsgemäße Verfahren als Rohwasser praktisch alle natürlich vorhandenen oder künstlich hergestellten, salzhaltigen Wässer eingesetzt werden. So setzt das erfindungsgemäße Verfahren einen im Wesentlichen ubiquitär vorhandenen Rohstoff ein, woraus sich ein breiter geografischer Einsatzbereich ergibt. Derartige salzhaltige Gewässer stehen praktisch überall und kostengünstig zur Verfügung.

Zudem kann das salzhaltige Rohwasser einen Salzgehalt, insbesondere einen Gehalt von Alkalimetallchloriden, bis zur Sättigung, vorzugsweise im Bereich von 0,4 bis 25 Gew.-%, noch bevorzugter 2 bis 10 Gew.-%, insbesondere 2,8 bis 4,6 Gew.-%, aufweisen.

Hierdurch wird es vorteilhaft möglich, hochsalzhaltige Wässer, wie beispielsweise hochsalzhaltige Industrieabwässer, Meerwasserkonzentrate, oder beispielsweise natürliche Meerwässer mit hohen Salzkonzentrationen, wie beispielsweise das Wasser des Toten Meeres, im Rahmen des erfindungsgemäßen Verfahrens einzusetzen. Andererseits lässt sich auch gewöhnliches Meerwasser problemlos als Rohwasser mit dem erfindungsgemäßen Verfahren einsetzen.

Ferner kann in Schritt (a) der erste Elektrolyt aus dem salzhaltigen Rohwasser erzeugt werden.

Das Verarbeiten des Katholyten und/oder des ersten Elektrolyten gemäß Schritt (c) kann chargenweise oder kontinuierlich erfolgen.

Dabei kann durch ein chargenweises Verarbeiten ein höherer Ausarbeitungsgrad des ersten Elektrolyten und damit ein höherer Systemwirkungsgrad erzielt werden.

Wird der Katholyt dagegen kontinuierlich verarbeitet, so sind vorteilhaft kleinere Gefäßgrößen und/oder eine geringere Anzahl an Behältern zur Durchführung des Verfahrens erforderlich.

Des Weiteren können der erste Elektrolyt und/oder der Katholyt wenigstens während des Schrittes (b) durch den Kathodenraum der Elektrodialysezelle und über ein Speichergefäß für den Katholyten und/oder ersten Elektrolyten umgewälzt werden.

Mittels dieser Umwälzung kann der erste Elektrolyt und/oder der Katholyt zum Ausgleich unterschiedlicher Konzentrationen homogenisiert werden.

Ferner wird durch das Umwälzen das Konditionieren des ersten Elektrolyten und/oder des Katholyten vereinfacht. Unter Konditionieren wird hierbei das Einstellen eines vorbestimmten pH-Werts, einer vorbestimmten Temperatur und/oder einer vorbestimmten Konzentration von beispielsweise Chlorid- und/oder Hydroxidionen verstanden. Dabei kann die Konzentrationseinstellung durch gezieltes Ausschleusen von verbrauchtem Katholyten und gezieltes Zuführen von frischem oder vorzugsweise verarbeitetem Elektrolyten eingestellt werden.

Des Weiteren kann während einer der Schritte (a) bis (d) der erste Elektrolyt und/oder der Katholyt temperiert, insbesondere gekühlt, werden.

So kann durch Einstellen einer höheren Temperatur zwar eine bessere Leitfähigkeit des Elektrolyten erzielt werden. Allerdings können durch Einstellen der Elektrolyt-Temperatur auf maximal 45 °C, beispielsweise durch Kühlen des Elektrolyten und/oder des Katholyten, die in der Elektrodialysezelle angeordneten Membranen vor thermischer Beeinträchtigung geschützt werden.

Wenigstens während einem der Schritte (a) bis (d) kann der erste Elektrolyt und/oder der Katholyt ein Gas, insbesondere Wasserstoffgas, abgeben.

Durch die Abgabe eines gasförmigen Reaktionsprodukts, wie beispielsweise Wasserstoffgas, vom Katholyten wird die Elektrodialyse-Reaktion aufgrund der höheren elektrischen Leitfähigkeit des Katholyten verbessert und/oder der Konzentrations- oder Partialdruckabnahme der Produkte erleichtert.

Darüber hinaus kann Schritt (c) durchgeführt werden, sobald die Konzentration an Chloridionen im ersten Elektrolyten und/oder im Katholyten eine Konzentration in einem Bereich von 30 bis 70 %, vorzugsweise 33 bis 50 %, insbesondere 37 bis 43 % der Konzentration an Chloridionen im ersten Elektrolyten in Schritt (a) liegt.

Hierdurch kann zum Einen mit der Verarbeitung des Katholyten gemäß Schritt (c) des erfindungsgemäßen Verfahrens bereits während der Durchführung der Elektrodialyse begonnen werden. Durch diesen wenigstens teilweisen Parallelbetrieb von Elektrodialyse und Verarbeitung des dabei resultierenden Katholyten kann die für das Gesamtverfahren erforderliche Zeitdauer verkürzt werden.

Erfindungsgemäß kann zum Anderen sogar vorgesehen werden, dass das Verarbeiten gemäß Schritt (c) des erfindungsgemäßen Verfahrens bereits mit Beginn der Elektrodialyse-Reaktion begonnen wird.

Durch das wenigstens teilweise zeitgleiche Durchführen von Elektrodialyse und Verarbeiten wird ein Betrieb der Elektrodialysezelle bei einer geringen Chloridionen-Konzentration vorteilhaft vermieden. Mit der Chloridionen-Konzentration sinkt nämlich auch der Wirkungsgrad der Elektrodialyse-Reaktion ab.

Während des Schrittes (b) kann die Zellenspannung in einem Bereich von 4 bis 9, vorzugsweise von 5 bis 7 Volt (V), liegen. Zudem kann die Zellenstromdichte in einem Bereich von 500 bis 3.000, vorzugsweise von 1.000 bis 2.000 Ampere pro Quadratmeter (A/m²), liegen.

Es hat sich herausgestellt, dass durch die Verwendung einer derartigen Zellenspannung und einer derartigen Zellenstromdichte die Elektrodialyse-Reaktion des erfindungsgemäßen Verfahrens optimal abläuft.

Ferner kann das Verfahren den Schritt aufweisen:
(e) Während Schritt (b) Verwenden eines zweiten Elektrolyten und/oder eines Anolyten auf der Anodenseite, wobei der zweite Elektrolyt und/oder der Anolyt eine nicht oxidierbare Säure, vorzugsweise Schwefelsäure, Salpetersäure oder Phosphorsäure, und/oder deren Alkalimetallsalze, vorzugsweise Natriumsulfat, Natriumnitrat oder Natriumphosphat, oder Mischungen derselben enthalten kann.

Dabei dienen der weitere, zweite Elektrolyt und/oder der Anolyt zur vorteilhaften Erhöhung der Leitfähigkeit und damit zu einer Verbesserung der Elektrodialyse-Reaktion. Wird als zweiter Elektrolyt und/oder Anolyt eine Säure eingesetzt, so dient diese als kostengünstige Quelle für Protonen. Wird als zweiter Elektrolyt und/oder Anolyt ein Salz, wie beispielsweise Natriumsulfat, eingesetzt, so wird nach kurzer Elektrodialysedauer dieses Salz zu seiner korrespondierenden Säure umgewandelt.

Darüber hinaus kann das Verfahren den Schritt aufweisen:
f) Während oder nach Schritt (b) Abführen des Produkts in Gestalt einer wässerigen Chlorwasserstoffsäure, vorzugsweise aus dem Produktraum der Elektrodialysezelle.

Des Weiteren kann das Verfahren den Schritt aufweisen:
g) Konditionieren eines salzhaltigen Wassers, insbesondere des salzhaltigen Rohwassers, mittels des Produkts für einen Entsalzungsvorgang.

Das Konditionieren eines salzhaltigen Wassers unter Verwendung des Produkts für einen Entsalzungsvorgang verhindert vorteilhaft die Ausbildung schwerlöslicher und fest auf dem Untergrund haftender Krusten, sog. "Scaling", beispielsweise in Meerwasser-Entsalzungsanlagen. Indem diese Ablagerungen auf Oberflächen, beispielsweise von Erwärmungsvorrichtungen für salzhaltige Wässer, vermieden werden, wird eine hohe Wärmeübertragung von Wand zur flüssigen Phase aufrechterhalten, wodurch der Gesamtwirkungsgrad der Anlage auf hohem Niveau erhalten werden kann.

In vorrichtungstechnischer Hinsicht wird die Aufgabe der Erfindung durch das Elektrodialyse-System gemäß Anspruch 13 gelöst.

So wird erstmalig ein Elektrodialyse-System zur Durchführung des erfindungsgemäßen Verfahrens vorgeschlagen. Dabei weist das Elektrodialyse-System wenigstens auf:
- die Elektrodialysezelle;
   wobei die Elektrodialysezelle aufweist:
   - eine Anionenaustauscher-Membran,
   - eine Kationenaustauscher-Membran,
   - eine Kathode, und
   - eine Anode;
- das Speichergefäß für den Katholyten und/oder den ersten Elektrolyten;
- ein Reaktionsgefäß zur Durchführung des Schrittes (c) des erfindungsgemäßen Verfahrens.

Dabei ist die Elektrodialysezelle eine Dreikammern-Elektrodialysezelle und weist drei Kammern auf, nämlich einen Kathodenraum, der die Kathode aufnimmt, einen Produktraum, der als Mittelkammer ausgebildet ist, und einen Anodenraum, der die Anode aufnimmt.

Dabei gelten die Vorteile des erfindungsgemäßen Verfahrens analog.

Für das Speichergefäß für den Anolyten und/oder den zweiten Elektrolyten gelten die Vorteile des Speichergefäßes für den Katholyten und/oder ersten Elektrolyten analog.

Weiter kann das Elektrodialyse-System aufweisen:
- ein Speichergefäß für das Produkt.

Durch das Vorsehen eines Speichergefäßes für das Produkt können die Erzeugung des Produkts und dessen Verbrauch zeitlich voneinander entkoppelt werden.

Schließlich können das Speichergefäß für den Katholyten und/oder den ersten Elektrolyten und/oder das Speichergefäß für den Anolyten und/oder den zweiten Elektrolyten wenigstens eine Einrichtung zur Abgabe von Gasen, insbesondere von Wasserstoff- und/oder Sauerstoffgas, aufweisen.

Das Abführen von Gasen aus den Edukten bzw. Produkten des Elektrodialyse-Verfahrens erlaubt eine Erhöhung der Leitfähigkeit der Elektrolyte und/oder eine Konzentrations- oder Partialdruckabnahme der Produkte. Hierdurch wird die Elektrodialyse-Reaktion erleichtert und deren Wirkungsgrad verbessert.

Die Erfindung wird in nachfolgenden Ausführungsbeispielen anhand der Figur der Zeichnung näher erläutert. Es zeigt:

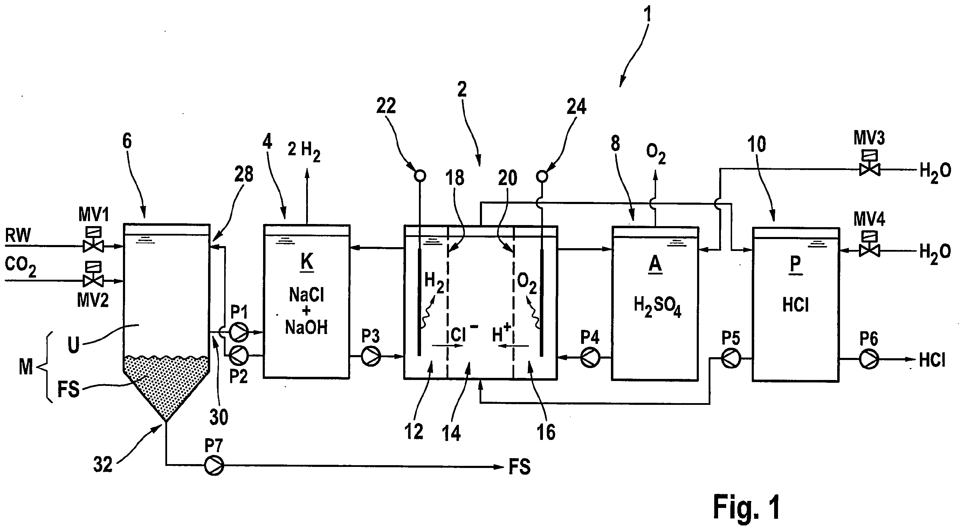

Fig. 1 eine schematische Übersicht über das erfindungsgemäße Elektrodialyse-System, mittels dessen das erfindungsgemäße Erzeugungsverfahren durchgeführt werden kann.

Das in Fig. 1 dargestellte Elektrodialyse-System 1 weist eine Elektrodialysezelle 2, ein Speichergefäß 4 für einen ersten Elektrolyten E1 und/oder einen Katholyten K, ein Reaktionsgefäß 6, ein Speichergefäß 8 für einen zweiten Elektrolyten E2 und/oder Anolyten A sowie ein Speichergefäß 10 für ein Produkt P auf.

Die Elektrodialysezelle 2 weist einen Kathodenraum 12, einen Produktraum 14 und einen Anodenraum 16 auf. Dabei ist der Kathodenraum 12 vom Produktraum 14 durch eine Anionaustauscher-Membran 18 getrennt. Der Anodenraum 16 ist vom Produktraum 14 durch eine Kationenaustauscher-Membran 20 getrennt. Im Kathodenraum 12 ist eine Kathode 22 angeordnet, die vom ersten Elektrolyten E1 und/oder vom Katholyten K umgeben ist. Analog ist im Anodenraum 16 eine Anode 24 angeordnet, die vom zweiten Elektrolyten E2 und/oder Anolyten A umgeben ist.

Das Speichergefäß 4 für den ersten Elektrolyten E1 und/oder Katholyten K weist eine beliebige, vorzugsweise zylindrische, Gestalt auf.

Das Reaktionsgefäß 6 weist bevorzugt eine zylindrische, vorzugsweise zylindrokonische Gestalt auf, ist jedoch nicht hierauf beschränkt

Das Speichergefäß 8 für den zweiten Elektrolyten E2 und/oder Anolyten A sowie das Speichergefäß 10 für das Produkt P können eine beliebige Gestalt aufweisen.

Im Anodenraum 16 der Elektrodialysezelle 2 findet die nachfolgende Anodenreaktion statt:

2 H₂O →- 4 H⁺ + O₂↑ + 4 e⁻

Reaktionsgemäß verliert der Anolyt A an Wasser H₂O, während Protonen H⁺ und gasförmiger Sauerstoff O₂ an der Anode 24 freigesetzt werden. Dabei enthält der Anolyt A vorzugsweise Schwefelsäure H₂SO₄, die zur Verbesserung der Leitfähigkeit dient, aber während der Anodenreaktion nicht umgesetzt wird.

Im Kathodenraum 12 findet die sogenannte Kathodenreaktion statt:

2 NaCl + 2 H₂O + 2 e⁻ → 2 NaOH + 2 Cl⁻ + H₂↑

Infolge der Ionenwanderung durch die Membran nimmt die Konzentration an Chloridionen Cl⁻ im Katholyt K ab. Dagegen nimmt die Konzentration an Hydroxidionen OH⁻ zu. Ferner wird an der Kathode 22 gasförmiger Wasserstoff H₂ freigesetzt.

Aus dem Kathodenraum 12 wandern Chloridionen Cl⁻ durch die Anionenaustauscher-Membran 18. Dagegen wandern aus dem Anodenraum 16 Protonen H⁺ durch die Kationenaustauscher-Membran 20. Im Produktraum 14 vereinigen sich diese beiden Ionenarten zum erwünschten Produkt Chlorwasserstoff HCl bzw. deren Säure, nämlich wässerige Salzsäure-Lösung.

Der im Kathodenraum 12 der Elektrodialysezelle 2 enthaltene erste Elektrolyt E1 und/oder Katholyt K wird ständig über das Speichergefäß 4 mittels einer Pumpe P3 umgewälzt. Hierdurch ist es möglich, den Katholyten K durch Abgabe von Wasserstoffgas H₂ zu entgasen und ihn gleichzeitig durch Zuführung von Chloridionen Cl⁻ von außen in das Speichergefäß 4 mit Chloridionen Cl⁻ anzureichern. Die Einrichtung zur Abgabe des Wasserstoffgases H₂ ist in Fig. 1 aus Gründen der Übersichtlichkeit nicht dargestellt.

Schließlich kann der Katholyt K durch Umwälzen in das Speichergefäß 4 auf eine für die Kathodenreaktion optimale Chloridionen Cl⁻-Konzentration eingestellt werden.

Bedingt durch die vorstehend beschriebene Anodenreaktion verliert der Anolyt A im Anodenraum 16 ständig Wasser, während an der Anode 20 gasförmiger Sauerstoff O₂ entsteht. Durch Umwälzung des Anolyten A in das Speichergefäß 8 mittels einer Pumpe P4 kann der Anolyt A durch Abführen von Sauerstoffgas O₂ wirksam entgast werden. Die Einrichtung zur Abgabe des Sauerstoffgases O₂ ist in Fig. 1 aus Gründen der Übersichtlichkeit nicht dargestellt.

Ferner wird die Konzentration des Anolyten A durch Zuführen von vollentsalztem Wasser auf die Ausgangskonzentration vor der Reaktion verdünnt.

Mittels einer Pumpe P5 wird das Produkt P, nämlich verdünnte Salzsäure HCl, über den Produktraum 14 der Elektrodialysezelle 2 und das Speichergefäß 10 umgepumpt.

Mit einer Pumpe P6 wird das Produkt P an den Verbraucher, wie beispielsweise eine Meerwasser-Entsalzungsanlage, abgegeben. Über ein Magnetventil MV4 wird das der Abgabemenge entsprechende Volumen an vollentsalztem Wasser pegelgeregelt zugeführt.

Da der Katholyt K während der Elektrodialyse an Chloridionen Cl⁻ verarmt, muss der verbrauchte Katholyt K bei Erreichen einer vorbestimmten Minimalkonzentration an Chloridionen Cl⁻ durch frischen Elektrolyten ersetzt werden. Diese Minimalkonzentration von Chloridionen Cl⁻ liegt in einem Bereich von 30 bis 70 %, vorzugsweise 33 bis 50 %, insbesondere 37 bis 43 % der Konzentration an Chloridionen Cl⁻ im ersten Elektrolyten E1 in Schritt (a) zu Beginn der Elektrodialysereaktion.

Dabei wird die Konzentration an Chloridionen Cl⁻ über die Leitfähigkeit des Katholyten K und/oder des ersten Elektrolyten E1 gemessen. Alternativ kann die Konzentration an Chloridionen Cl⁻ auch über die bei der Elektrodialyse-Reaktion geflossene elektrische Ladung berechnet werden.

Wie oben dargelegt wurde, kann wenigstens eine Teilmenge des Katholyten K gemäß Schritt (c) derart verarbeitet werden, dass daraus wieder der erste Elektrolyt E1 resultiert.

Im Hinblick auf weitere Details hierzu wird vollinhaltlich Bezug auf den Inhalt der zeitgleich hinterlegten Patentanmeldung derselben Anmelderin mit dem Titel: "Verfahren zur Aufbereitung eines salzhaltigen Rohwassers zur Herstellung eines Prozesswassers, damit hergestelltes Prozesswasser und Vorrichtung zur Durchführung des Verfahrens" (DE 102010017490 A1) genommen.

Die zur Verarbeitung erforderlichen Chloridionen Cl⁻ werden im nach dem dortigen Verfahren erzeugten Prozesswasser PW bereitgestellt.

Das erfindungsgemäße Verfahren weist eine Reihe von Vorteilen für den Anwender auf. So sind als Edukte insgesamt im Wesentlichen nur ein salzhaltiges Rohwasser, voll entsalztes Wasser sowie elektrischer Strom erforderlich.

Alle Elektrolyte sind elektrisch gut leitend. Folglich sind die Zellenspannung und der Energiebedarf gering. Beim Einsatz von Meerwasser als salzhaltigem Rohwasser beim Verarbeitungsschritt (c) und anschließendem, wenigstens teilweisem Wiederverwenden des erfindungsgemäß verarbeiteten Katholyten K gemäß Schritt (d) liegt der Energiebedarf der Elektrodialyse-Reaktion beispielsweise bei 0,2 bis 0,4 kWh pro Mol erzeugtem Chlorwasserstoff HCl.

Der Energiebedarf kann weiter abgesenkt werden durch Einsatz von salzhaltigen Rohwasserkonzentraten, da diese eine erhöhte elektrische Leitfähigkeit aufweisen.

Beim Verarbeiten wenigstens einer Teilmenge des Katholyten K gemäß Schritt (c) werden vorteilhaft die störenden Erdalkalimetallionen im Wesentlichen quantitativ abgeschieden und aus der Flüssigkeit entfernt. Hierdurch und aufgrund der in den einzelnen Zellenräumen vorliegenden pH-Bedingungen und der Wanderungsbewegung der Ionen wird das Ausfallen schwerlöslicher Erdalkalimetallsalze in der Elektrodialysezelle 2 wirksam vermieden. Dies bewirkt vorteilhaft eine hohe Lebensdauer der Membranen des Elektrodialyse-Systems.

Erfindungsgemäß entstehen als Abgase Wasserstoff H₂ und Sauerstoff O₂ getrennt voneinander, welche problem- und gefahrlos abgegeben oder einer anderweitigen Nutzung zugeführt werden können.

Darüber hinaus kann das mit dem erfindungsgemäßen Verfahren erzeugte Produkt P in den Anolyten A und/oder zweiten Elektrolyten E2 im Anodenraum 16 zudosiert werden. Das hierdurch entstehende Sauerstoff O₂-Chlor Cl₂-Gasgemisch ist für eine Entkeimung von Wasser geeignet.

Ferner kann das Elektrodialyse-System 1 weitere, nicht näher beschriebene Rohrleitungen, Pumpen, Ventile und dergleichen aufweisen, mit denen die einzelnen Gefäße, wie beispielsweise die Elektrodialysezelle 2, das Speichergefäß 4, das Reaktionsgefäß 6, das Speichergefäß 8 und das Speichergefäß 10 miteinander verbunden sind. Damit können Rohstoffe, Zwischenprodukte und Endprodukte innerhalb des Elektrodialyse-Systems 1 transportiert werden.

Erfindungsgemäß wird somit ein Produkt der Elektrodialyse-Reaktion, der Katholyt K, der eine erhöhte Konzentration an Hydroxidionen OH⁻ aufweist, zur Verarbeitung eines salzhaltigen Rohwassers RW und damit als Edukt im Verarbeitungsverfahren gemäß Schritt (d) verwendet.

Umgekehrt wird ein Produkt des Verarbeitungsverfahrens, nämlich ein an Chloridionen Cl⁻ angereicherter und an Hydroxidionen OH⁻ abgereicherter erster Elektrolyt E1 als Edukt für die Elektrodialyse-Reaktion verwendet.

Durch diese wechselseitige Verwendung von Edukten und Produkten werden zum Einen der Einsatz von Rohstoffen und Chemikalien vermieden oder wenigstens vermindert. Zum Anderen wird gleichzeitig eine effiziente Entsorgung der jeweils entstehenden Produkte sichergestellt.

Erfindungsgemäß werden unter Salz alle bekannten Salze, vorzugsweise Alkalimetallsalze und/oder Erdalkalimetallsalze, weiter bevorzugt Salze mit Halogenidionen als Anion, insbesondere NaCl, oder Mischungen derselben verstanden.

Die Erfindung lässt neben den erläuterten Ausführungsbeispielen weitere Gestaltungsansätze zu.

So kann das Speichergefäß 4 für den Katholyten K gleichzeitig auch als Speichergefäß für das Prozesswasser PW des nicht näher erläuterten Verarbeitungsverfahrens des Schrittes (c) verwendet werden. Hierdurch kann vorteilhaft ein Speichergefäß eingespart werden.

## Patentansprüche

1. Verfahren zur Erzeugung von Chlorwasserstoff (HCl) oder einer wässerigen Lösung derselben unter Verwendung eines salzhaltigen Rohwassers (RW), mit den Schritten:
a) Bereitstellen eines ersten Elektrolyten (E1),
wobei der erste Elektrolyt (E1) Chloridionen (Cl⁻) enthält;
b) Durchführen einer Elektrodialyse,
wobei der erste Elektrolyt (E1) einer kathodischen Reduktion unterzogen wird, woraus ein Katholyt (K) resultiert,
wobei im ersten Elektrolyten (E1) die Konzentration an Chloridionen (Cl⁻) sinkt,
wobei im ersten Elektrolyten (E1) die Konzentration an Hydroxidionen (OH⁻) steigt, und
wobei ein Produkt (P) in Gestalt von Chlorwasserstoff (HCl) oder einer wässerigen Lösung derselben erzeugt wird;
c) Verarbeiten wenigstens einer Teilmenge des Katholyten (K),
woraus der erste Elektrolyt (E1) resultiert,
wobei ein salzhaltiges Rohwasser (RW) verwendet wird,
wobei im Katholyten (K) die Konzentration an Chloridionen (Cl⁻) steigt, und
wobei im Katholyten (K) die Konzentration an Hydroxidionen (OH⁻) sinkt; und
d) wenigstens teilweises Wiederverwenden des nach Schritt (c) verarbeiteten Katholyten (K) als der erste Elektrolyt (E1) in Schritt (b);
wobei die Elektrodialyse in einer Elektrodialysezelle (2) durchgeführt wird,
wobei die Elektrodialysezelle (2) eine Dreikammern-Elektrodialysezelle ist und drei Kammern aufweist,
nämlich einen Kathodenraum (12), der eine Kathode (22) aufnimmt,
einen Produktraum (14), der als Mittelkammer ausgebildet ist, und
einen Anodenraum (16), der eine Anode (24) aufnimmt.

2. Verfahren nach Anspruch 1, **dadurch gekennzeichnet, dass** das salzhaltige Rohwasser (RW) ein natürliches oder künstlich hergestelltes Salzwasser, vorzugsweise ein Meerwasser, ein Brackwasser, ein Grundwasser, ein Quellwasser, eine natürliche oder künstlich hergestellte Sole, oder Mischungen oder Konzentrate derselben, ist.

3. Verfahren nach Anspruch 1 oder 2, **dadurch gekennzeichnet, dass** das salzhaltige Rohwasser (RW) ein Salzgehalt, insbesondere einen Gehalt von Alkalimetallchloriden, bis zur Sättigung, vorzugsweise im Bereich von 0,4 bis 25 Gew.-%, noch bevorzugter 2 bis 10 Gew.-%, insbesondere 2,8 bis 4,6 Gew.-%, aufweist.

4. Verfahren nach wenigstens einem der Ansprüche 1 bis 3, **dadurch gekennzeichnet, dass** in Schritt (a) der erste Elektrolyt (E1) aus dem salzhaltigen Rohwasser (RW) erzeugt wird.

5. Verfahren nach wenigstens einem der Ansprüche 1 bis 4, **dadurch gekennzeichnet, dass** das Verarbeiten des Katholyten (K) und/oder des ersten Elektrolyten (E1) gemäß Schritt (c) chargenweise oder kontinuierlich erfolgt.

6. Verfahren nach wenigstens einem der Ansprüche 1 bis 5, **dadurch gekennzeichnet, dass** der erste Elektrolyt (E1) und/oder der Katholyt (K) wenigstens während des Schrittes (b) durch den Kathodenraum (12) der Elektrodialysezelle (2) und über ein Speichergefäß (4) für den Katholyten (K) und/oder ersten Elektrolyten (E1) umgewälzt wird.

7. Verfahren nach wenigstens einem der Ansprüche 1 bis 6, **dadurch gekennzeichnet, dass** wenigstens während einem der Schritte (a) bis (d) der erste Elektrolyt (E1) und/oder der Katholyt (K) temperiert, insbesondere gekühlt, wird.

8. Verfahren nach wenigstens einem der Ansprüche 1 bis 7, **dadurch gekennzeichnet, dass** wenigstens während einem der Schritte (a) bis (d) der erste Elektrolyt (E1) und/oder der Katholyt (K) ein Gas, insbesondere Wasserstoffgas (H₂), abgibt.

9. Verfahren nach wenigstens einem der Ansprüche 1 bis 8, **dadurch gekennzeichnet, dass** Schritt (c) durchgeführt wird, sobald die Konzentration an Chloridionen (Cl⁻) im ersten Elektrolyten (E1) und/oder im Katholyten (K) eine Konzentration in einem Bereich von 30 bis 70 %, vorzugsweise 33 bis 50 %, insbesondere 37 bis 43 % der Konzentration an Chloridionen (Cl⁻) im ersten Elektrolyten (E1) im Schritt (a) liegt.

10. Verfahren nach wenigstens einem der Ansprüche 1 bis 9, **dadurch gekennzeichnet, dass** während des Schrittes (b) die Zellenspannung in einem Bereich von 4 bis 9, vorzugsweise von 5 bis 7 V, liegt und/oder die Zellenstromdichte in einem Bereich von 500 bis 3.000, vorzugsweise von 1.000 bis 2.000 A/m², liegt.

11. Verfahren nach wenigstens einem der Ansprüche 1 bis 10, **dadurch gekennzeichnet, dass** das Verfahren ferner den Schritt aufweist:
e) während Schritt (b) Verwenden eines zweiten Elektrolyten (E2) und/oder eines Anolyten (A) auf der Anodenseite, wobei der zweite Elektrolyt (E2) und/oder der Anolyt (A) eine nicht oxidierbare Säure, vorzugsweise Schwefelsäure (H₂SO₄), Salpetersäure (HNO₃) oder Phosphorsäure (H₃PO₄), und/oder deren Alkalimetallsalze, vorzugsweise Natriumsulfat (Na₂SO₄), Natriumnitrat (NaNO₃) oder Natriumphosphat (Na₃PO₄), oder Mischungen derselben enthält.

12. Verfahren nach wenigstens einem der Ansprüche 1 bis 11, **dadurch gekennzeichnet, dass** das Verfahren ferner den Schritt aufweist:
g) Konditionieren eines salzhaltigen Wassers, insbesondere des salzhaltigen Rohwassers (RW), mittels des Produkts (P) für einen Entsalzungsvorgang.

13. Elektrodialyse-System (1) zur Durchführung des Verfahrens nach wenigstens einem der Ansprüche 1 bis 12, wobei das Elektrodialysesystem (1) wenigstens aufweist:
- die Elektrodialysezelle (2);
wobei die Elektrodialysezelle (2) aufweist:
- eine Anionenaustauscher-Membran (18),
- eine Kationenaustauscher-Membran (20),
- eine Kathode (22), und
- eine Anode (24);
- das Speichergefäß (4) für den Katholyten (K) und/oder den ersten Elektrolyten (El);
- ein Reaktionsgefäß (6) zur Durchführung des Schrittes (c) des Verfahrens nach wenigstens einem der Ansprüche 1 bis 12;
wobei die Elektrodialysezelle (2) eine Dreikammern-Elektrodialysezelle ist und drei Kammern aufweist, nämlich:
- einen Kathodenraum (12), der die Kathode (22) aufnimmt,
- einen Produktraum (14), der als Mittelkammer ausgebildet ist, und
- einen Anodenraum (16), der die Anode (24) aufnimmt.

## Claims

1. A method of producing hydrogen chloride (HCl) or an aqueous solution thereof by using an untreated saline water (RW), the method including the steps of:
a) providing a first electrolyte (E1),
wherein the first electrolyte (E1) contains chloride ions (Cl⁻);
b) carrying out an electrodialysis,
wherein the first electrolyte (E1) is subjected to a cathodic reduction from which results a catholyte (K),
wherein the concentration of chloride ions (Cl⁻) decreases in the first electrolyte (E1),
wherein the concentration of hydroxide ions (OH⁻) increases in the first electrolyte (E1), and
wherein a product (P) in the form of hydrogen chloride (HCl) or an aqueous solution thereof is produced;
c) processing of at least a partial quantity of the catholyte (K),
from which results the first electrolyte (E1),
wherein an untreated saline water (RW) is used,
wherein the concentration of chloride ions (Cl⁻) increases in the catholyte (K), and
wherein the concentration of hydroxide ions (OH⁻) decreases in the catholyte (K); and
d) at least partial reuse of the catholyte (K) processed according to step (c) as the
first electrolyte (E1) in step (b);
wherein the electrodialysis is carried out in an electrodialysis cell (2),
wherein the electrodialysis cell (2) is a three-chamber electrodialysis cell and comprises three chambers,
namely, a cathode space (12) accommodating a cathode (22), a product space (14) implemented in the form of an intermediate chamber, and an anode space (16) accommodating an anode (24).

2. The method according to claim 1, **characterized in that** the untreated saline water (RW) is a natural or synthetically produced salt water, preferably a sea water, a brackish water, a subsurface water, a spring water, a natural or synthetically produced saline water, or mixtures or concentrates thereof.

3. The method according to claim 1 or 2, **characterized in that** the untreated saline water (RW) presents a salt content, in particular a content of alkali metal chlorides, up to saturation, preferably in the range from 0.4 to 25 % (wt.), in a more preferred manner 2 to 10 % (wt.), in particular 2.8 to 4.6 % (wt.).

4. The method according to at least one of claims 1 to 3, **characterized in that** in step (a) the first electrolyte (E1) is produced from the untreated saline water (RW).

5. The method according to at least one of claims 1 to 4, **characterized in that** processing of the catholyte (K) and/or of the first electrolyte (E1) according to step (c) is carried out in batches or continuously.

6. The method according to at least one of claims 1 to 5, **characterized in that** the first electrolyte (E1) and/or the catholyte (K) is circulated at least during step (b) through the cathode space (12) of the electrodialysis cell (2) and via a storage vessel (4) for the catholyte (K) and/or first electrolyte (E1).

7. The method according to at least one of claims 1 to 6, **characterized in that** the first electrolyte (E1) and/or the catholyte (K) is tempered, in particular cooled, during at least one of steps (a) to (d).

8. The method according to at least one of claims 1 to 7, **characterized in that** during at least one of steps (a) to (d) the first electrolyte (E1) and/or the catholyte (K) emits a gas, in particular hydrogen gas (H₂).

9. The method according to at least one of claims 1 to 8, **characterized in that** step (c) is carried out as soon as the concentration of chloride ions (Cl⁻) in the first electrolyte (E1) and/or in the catholyte (K) has a concentration situated in a range from 30 to 70 %, preferably 33 to 50 %, in particular 37 to 43 % the concentration of chloride ions (Cl⁻) in the first electrolyte (E1) in step (a).

10. The method according to at least one of claims 1 to 9, **characterized in that** during step (b), the cell voltage is situated in a range from 4 to 9 V, preferably from 5 to 7 V, and/or the cell current density is situated in a range from 500 to 3,000 A/m², preferably from 1,000 to 2,000 A/m².

11. The method according to at least one of claims 1 to 10, **characterized in that** the method further includes the step of:
e) during step (b), using a second electrolyte (E2) and/or an anolyte (A) on the anode side, wherein the second electrolyte (E2) and/or the anolyte (A) contains a non-oxidizable acid, preferably sulfuric acid (H₂SO₄), nitric acid (HNO₃) or phosphoric acid (H₃PO₄), and/or their alkali metal salts, preferably sodium sulfate (Na₂SO₄), sodium nitrate (NaNO₃), or sodium phosphate (Na₃PO₄), or mixtures thereof.

12. The method according to at least one of claims 1 to 11, **characterized in that** the method further includes the step of:
g) conditioning a saline water, in particular the untreated saline water (RW), by means of the product (P) for a desalination process.

13. An electrodialysis system (1) for carrying out the method according to at least one of claims 1 to 12, the electrodialysis system (1) comprising at least:
- the electrodialysis cell (2);
wherein the electrodialysis cell (2) comprises:
- an anion exchanger membrane (18),
- a cation exchanger membrane (20),
- a cathode (22), and
- an anode (24);
- the storage vessel (4) for the catholyte (K) and/or the first electrolyte (El);
- a reaction vessel (6) for carrying out of step (c) of the method according to one of claims 1 to 12;
wherein the electrodialysis cell (2) is a three-chamber electrodialysis cell and comprises three chambers, namely,
a cathode space (12) accommodating a cathode (22),
a product space (14) implemented in the form of an intermediate chamber, and
an anode space (16) accommodating an anode (24).

## Revendications

1. Procédé de production de chlorure d'hydrogène (HCl) ou d'une solution aqueuse de celui-ci au moyen d'une eau non traitée salée (RW), comprenant les étapes suivantes :
a) fourniture d'un premier électrolyte (E1),
où le premier électrolyte (E1) contient des ions chlorure (Cl⁻) ;
b) réalisation d'une électrodialyse,
où le premier électrolyte (E1) est soumis à une réduction cathodique, donnant lieu à un catholyte (K),
où la concentration en ions chlorure (Cl⁻) diminue dans le premier électrolyte (E1),
où la concentration en ions hydroxyde (OH⁻) augmente dans le premier électrolyte (E1), et
où un produit (P) sous forme de chlorure d'hydrogène (HCl) ou une solution aqueuse de celui-ci est préparé ;
c) traitement d'au moins une quantité partielle du catholyte (K), donnant lieu au premier électrolyte (E1),
où une eau non traitée salée (RW) est utilisée,
où la concentration en ions chlorure (Cl⁻) augmente dans le catholyte (K), et
où la concentration en ions hydroxyde (OH⁻) diminue dans le catholyte (K) ; et
d) réutilisation au moins partielle du catholyte (K) traité à l'étape (c) en tant que premier électrolyte (E1) à l'étape (b) ;
dans lequel l'électrodialyse est réalisée dans une cellule d'électrodialyse (2),
dans lequel la cellule d'électrodialyse (2) est une cellule d'électrodialyse à trois chambres et présente trois chambres,
à savoir un compartiment cathodique (12), qui reçoit une cathode (22),
un compartiment de produit (14) qui est conçu comme une chambre centrale, et
un compartiment anodique (16) qui reçoit une anode (24).

2. Procédé selon la revendication 1, **caractérisé en ce que** l'eau non traitée salée (RW) est une eau salée naturelle ou artificielle, de préférence de l'eau de mer, de l'eau saumâtre, de l'eau souterraine, de l'eau de source, une saumure naturelle ou artificielle, ou des mélanges ou concentrés de celles-ci.

3. Procédé selon la revendication 1 ou 2, **caractérisé en ce que** l'eau non traitée salée (RW) a une teneur en sel, en particulier une teneur en chlorures de métal alcalin, jusqu'à saturation, de préférence dans la plage de 0,4 à 25 % en poids, de manière plus préférée de 2 à 10 % en poids, en particulier de 2,8 à 4,6 % en poids.

4. Procédé selon au moins l'une des revendications 1 à 3, **caractérisé en ce que** dans l'étape (a), le premier électrolyte (E1) est généré à partir de l'eau non traitée salée (RW).

5. Procédé selon au moins l'une des revendications 1 à 4, **caractérisé en ce que** le traitement du catholyte (K) et/ou du premier électrolyte (E1) selon l'étape (c) est effectué par lots ou en continu.

6. Procédé selon au moins l'une des revendications 1 à 5, **caractérisé en ce que** le premier électrolyte (E1) et/ou le catholyte (K), au moins lors de l'étape (b), circulent à travers le compartiment cathodique (12) de la cellule d'électrodialyse (2) et jusqu'à un récipient de stockage (4) pour le catholyte (K) et/ou le premier électrolyte (E1).

7. Procédé selon au moins l'une des revendications 1 à 6, **caractérisé en ce qu'**au moins lors de l'une des étapes (a) à (d), le premier électrolyte (E1) et/ou le catholyte (K) est tempéré, en particulier refroidi.

8. Procédé selon au moins l'une des revendications 1 à 7, **caractérisé en ce qu'**au moins pendant l'une des étapes (a) à (d), le premier électrolyte (E1) et/ou le catholyte (K) libère un gaz, en particulier de l'hydrogène gazeux (H2).

9. Procédé selon au moins l'une des revendications 1 à 8, **caractérisé en ce que** l'étape (c) est exécutée dès que la concentration en ions chlorure (Cl⁻) dans le premier électrolyte (E1) et/ou dans le catholyte (K) atteint une concentration dans une plage de 30 jusqu'à 70 %, de préférence de 33 à 50 %, en particulier de 37 à 43 % de la concentration en ions chlorure (Cl⁻) dans le premier électrolyte (E1) à l'étape (a).

10. Procédé selon au moins l'une des revendications 1 à 9, **caractérisé en ce que** lors de l'étape (b), la tension de cellule est dans une plage de 4 à 9, de préférence de 5 à 7 V, et/ou la densité de courant de cellule est dans une plage de 500 à 3 000, de préférence de 1 000 à 2 000 A/m².

11. Procédé selon au moins l'une des revendications 1 à 10, **caractérisé en ce que** le procédé comprend en outre l'étape :
e) lors de l'étape (b), d'utilisation d'un second électrolyte (E2) et/ou d'un anolyte (A) côté anode, où le second électrolyte (E2) et/ou l'anolyte (A) contiennent un acide non oxydable, de préférence de l'acide sulfurique (H₂SO₄), de l'acide nitrique (HNO₃) ou de l'acide phosphorique (H₃PO₄) et/ou des sels de métal alcalin de ceux-ci, de préférence du sulfate de sodium (Na₂SO₄), du nitrate de sodium (NaNO₃) ou du phosphate de sodium (Na₃PO₄), ou des mélanges de ceux-ci.

12. Procédé selon au moins l'une des revendications 1 à 11, **caractérisé en ce que** le procédé comprend en outre l'étape :
g) de conditionnement d'une eau saline, en particulier de l'eau non traitée salée (RW), au moyen du produit (P) pour un procédé de dessalement.

13. Système d'électrodialyse (1) pour exécuter le procédé selon au moins l'une des revendications 1 à 12, dans lequel le système d'électrodialyse (1) présente au moins :
- la cellule d'électrodialyse (2) ;
où la cellule d'électrodialyse (2) présente :
- une membrane échangeuse d'anions (18),
- une membrane échangeuse de cations (20),
- une cathode (22), et
- une anode (24) ;
- un récipient de stockage (4) du catholyte (K) et/ou du premier électrolyte (E1) ;
- un récipient de réaction (6) pour exécuter l'étape (c) du procédé selon au moins l'une des revendications 1 à 12 ;
dans lequel la cellule d'électrodialyse (2) est une cellule d'électrodialyse à trois chambres et présente trois chambres, à savoir :
- un compartiment cathodique (12), qui reçoit la cathode (22),
- un compartiment de produit (14), qui est conçu comme une chambre centrale, et
- un compartiment anodique (16), qui reçoit l'anode (24).
